# EUROPEAN PATENT SPECIFICATION

(11) **EP 3 549 831 B1**
(45) Date of publication and mention of the grant of the patent: **05.05.2021**
(21) Application number: 17879228.9
(22) Date of filing: 14.11.2017
(51) Int. Cl.: B60R 21/207, B60R 21/231, B60R 21/237

(54) **SIDE AIR BAG DEVICE**
SEITENAIRBAGVORRICHTUNG
DISPOSITIF DE COUSSIN DE SÉCURITÉ GONFLABLE LATÉRAL

(30) Priority: 05.12.2016 JP 2016235920
(43) Date of publication of application: 09.10.2019
(73) Proprietor: Autoliv Development AB, 447 83 Vårgårda (SE)
(72) Inventor: KOBAYASHI, Yuto, Yokohama-shi Kanagawa 222-8580 (JP)
(74) Representative: Müller Verweyen
(86) International application number: PCT/JP2017/040971
(87) International publication number: WO 2018/105335

(56) References cited:
- WO-A1-2011/065385
- JP-A- 2011 031 871
- JP-A- 2011 527 965

## Description

### [Technical Field]

The present invention relates to a side airbag apparatus provided in a vehicle seat.

### [Background Art]

Airbag apparatuses are a standard feature in most vehicles today. An airbag apparatus is a safety apparatus that is activated in an emergency such as a vehicle collision, to catch and protect an occupant by inflating and deploying an airbag cushion (simply referred to as "cushion," hereinafter) using gas pressure.

There exist several types of airbag apparatuses tailored to various installation locations and applications. For example, a front airbag apparatus is provided in the center of a steering wheel in order to protect an occupant from frontal and rear impacts. In addition, in order to protect the occupant from an impact in a vehicle width direction upon a side collision and the like, a curtain airbag apparatus is provided in the vicinity of a ceiling above a side window, and a side airbag apparatus is provided on the side of a seat.

For example, PTL 1 discloses a vehicle seat provided with a side airbag apparatus. According to the technique disclosed in PTL 1, a side airbag 36, which is folded up, is installed outside of a side frame 16A in the vehicle width direction in a seat back 12, i.e., on the side opposite to the occupant.

### [Citation List]

### [Patent Literature]

[PTL 1] Japanese Patent Application Laid-open No. 2016-112927

### [Summary of Invention]

### [Technical Problem]

To this day, side airbag apparatuses are required to further improve occupant restraining force. Examples of measures to improve the occupant restraining force include setting the position for deploying an airbag cushion near the occupant. However, as shown in Fig. 3 and the like of PTL 1, the seat back is packed with a seat pad in which an urethane material or the like is used. For this reason, the space for storing the airbag cushion in the side airbag apparatus is extremely limited, making it difficult to come up with innovations to improve the occupant restraining force.

The present invention was contrived in view of the foregoing circumstances, and an object thereof is to provide a side airbag apparatus that can efficiently be stored in a seat back and improve the occupant restraining force

The document JP 2011 527965 discloses a side airbag apparatus according to the preamble of claim 1.

### [Solution to Problem]

To achieve the foregoing object, a typical configuration of a side airbag apparatus according to the present invention includes a seat frame built in a seat back of a vehicle seat along a side surface of the seat back, an inflator attached on an occupant side of the seat frame, an airbag cushion connected to the inflator and having a folded portion, as a part thereof, that is folded back to an opposite side of the seat frame from the occupant side, and a retaining portion fastening the folded portion of the airbag cushion to the opposite side of the seat frame.

According to this configuration, because the retaining portion is used to store the airbag cushion on both the occupant side of the seat frame and the opposite side of the seat frame, limited space inside the seat back can be utilized efficiently. Thus, the present invention is highly versatile for being able to be applied to vehicle seats of different sizes. The present invention can also contribute to the downsizing of a vehicle seat.

In addition, according to the airbag cushion having the foregoing configuration, the part thereof that is stored on the occupant side of the seat frame starts deploying first. Therefore, a reaction force acting from the seat frame onto the occupant side can be obtained at an early stage. This part of the airbag cushion that is stored on the occupant side of the seat frame is the root of the airbag cushion and, in the foregoing configuration, located closer to the occupant than to the inflated airbag cushion. Therefore, the foregoing configuration can improve the occupant restraining force.

The side airbag apparatus may further include a stud bolt extending from the inflator and passing through the seat frame, and the retaining portion fastens the folded portion of the airbag cushion on the opposite side of the seat frame by being hooked on the stud bolt. The retaining portion has a fragile portion capable of releasing the airbag cushion by rupturing when the airbag cushion inflates and deploys. The retaining portion is formed as a part of a cover covering at least a part of the airbag cushion. According to this configuration, the airbag cushion can be stored on both the occupant side of the seat frame and the opposite side of the seat frame.

In order to achieve the foregoing object, another typical configuration of the side airbag apparatus according to the present invention includes a seat frame built in a seat back of a vehicle seat along a side surface of the seat back, an inflator attached on an occupant side of the seat frame when an occupant is seated normally in the vehicle seat, an airbag cushion connected to the inflator and having a folded portion folded back to an opposite side of the seat frame from the occupant side via a front edge of the seat frame, and a retaining portion retaining the airbag cushion in a folded-back state onto the opposite side of the seat frame from the occupant side.

According to this configuration , the retaining portion is used to store the airbag cushion on both the occupant side of the seat frame and the opposite side of the seat frame, thereby efficiently utilizing the limited space inside the seat back. Thus, the present invention is highly versatile for being able to be applied to vehicle seats of different sizes. The present invention can also contribute to the downsizing of a vehicle seat. In addition, according to the airbag cushion having the foregoing configuration, the part thereof that is stored on the occupant side of the seat frame starts deploying first. Therefore, the reaction force acting from the seat frame onto the occupant side can be obtained at an early stage. This part of the airbag cushion that is stored on the occupant side of the seat frame is the root of the airbag cushion and, in the foregoing configuration, located closer to the occupant than to the inflated airbag cushion. Therefore, the foregoing configuration can improve the occupant restraining force.

The side airbag apparatus may further include a stud bolt extending from the inflator and passing through the seat frame, and the retaining portion retains the airbag cushion in a folded-back state onto the opposite side of the seat frame from the occupant side by being hooked on the stud bolt. According to this configuration, the airbag cushion can be stored on both the occupant side of the seat frame and the opposite side of the seat frame.

The retaining portion has a fragile portion capable of releasing the airbag cushion by rupturing when the airbag cushion inflates and deploys. According to this configuration, the airbag cushion in its stored state can be retained efficiently.

The retaining portion is formed as a part of a cover covering at least a part of the airbag cushion. With the retaining portion as well, the airbag cushion can be stored on both the occupant side of the seat frame and the opposite side of the seat frame.

The retaining portion may be formed of a nonwoven fabric. This configuration can realize the retaining portion.

The retaining portion may be made of the same material as a base fabric continuous with a base fabric of the airbag cushion. With the retaining portion, the airbag cushion can be stored on both the occupant side of the seat frame and the opposite side of the seat frame.

The side airbag apparatus may further include a cover covering at least a part of the airbag cushion. With this cover, the airbag cushion in its stored state can be retained efficiently.

The cover may be formed of a nonwoven fabric. This configuration can realize the cover.

### [Advantageous Effects of Invention]

The present invention can provide a side airbag apparatus that can efficiently be stored in a seat back and improve the occupant restraining force.

### [Brief Description of Drawings]

Fig. 1 is a diagram illustrating a side airbag apparatus according to a first embodiment of the present invention.
Fig. 2 is a diagram showing, from a different direction, a cushion in a stored state thereof shown in Fig. 1(b).
Fig. 3 is a cross-sectional view of the cushion in a stored state shown in Fig. 2(b), the cross-sectional view being taken along C-C.
Fig. 4 is a diagram illustrating a process of inflating and deploying the cushion of Fig. 3.
Fig. 5 is a diagram illustrating a side airbag apparatus according to a second embodiment of the present invention.
Fig. 6 is a diagram illustrating a process of inflating and deploying a cushion of Fig. 5(b).

### [Reference Signs List]

100 Side airbag apparatus
102 Seat
104 Seat back
106 Seat frame
108 Cushion
110 Inflator
112, 113 Stud bolt
114 Inner inflating portion
115 Folded portion
116 Outer inflating portion
118 Front edge of seat frame
120 Seat pad
122 Inner side surface of seat frame
124 Reaction force obtained by inner inflating portion
126 Outermost layer
128 Outer side surface of seat frame
130 Reaction force obtained by outer inflating portion
132 Force eliminating folding of inner inflating portion and outer inflating portion
140 Cover
142 Upper tab
144 Lower tab
146 Stitched portion
148 Hole portion
150 Slit
200 Side airbag apparatus of second embodiment
204 Cover of second embodiment
206 Extended region
208, 210 Hole portion
212 Slit

### [Description of Embodiments]

Preferred embodiments of the present invention are described hereinafter in detail with reference to the accompanying drawings. Sizes, materials, and other specific values described in the embodiments are merely illustrative for the purpose of facilitating understanding of the present invention and are not intended to limit the present invention unless otherwise specified. It should be noted, in the present specification and the drawings, that elements with substantially the same functions and configurations are denoted by the same reference numerals, to omit redundant explanations, and that elements not directly related to the present invention are not illustrated.

### (First Embodiment)

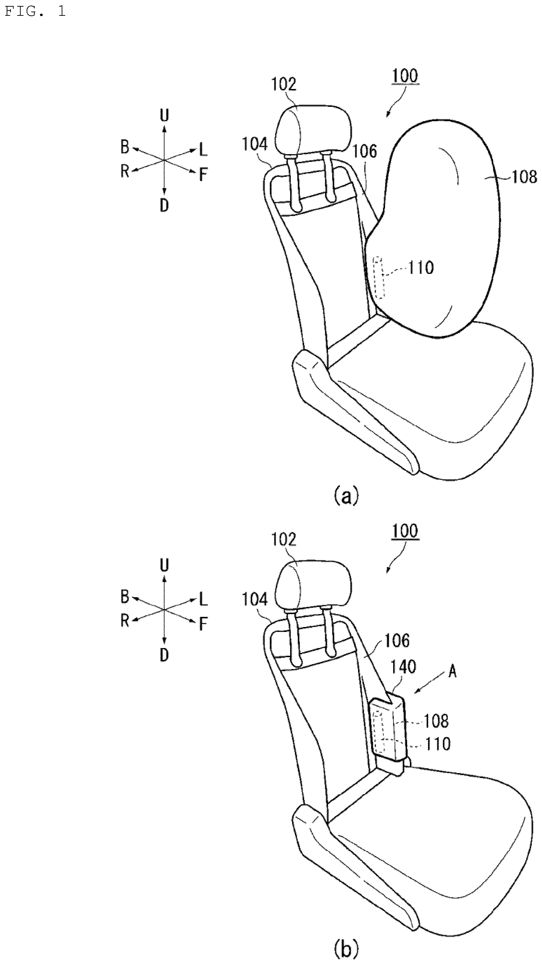

Fig. 1 is a diagram illustrating a side airbag apparatus 100 according to a first embodiment of the present invention. Fig. 1(a) illustrates, from the inside (the inside of a vehicle) in a vehicle width direction, the side airbag apparatus 100 and a left vehicle seat (seat 102) of the vehicle to which the side airbag apparatus 100 is applied. In Fig. 1(a) and all the other diagrams of the present application, a front-back direction of the vehicle is indicated by arrows F (forward) and B (back), the left-hand side and the right-hand side in the vehicle width direction are indicated by arrows L (left) and R (right), and a vertical direction of the vehicle is indicated by arrows U (up) and D (down).

Fig 1(a) does not show an outermost layer and a seat pad (e.g., urethane material) of a seat back 104 of the seat 102 but only illustrates a seat frame 106. The seat frame 106 is a member constituting a framework built in the seat back 104 and is built in the seat back 104 along a side surface and an upper edge of the seat back 104.

An airbag cushion (cushion 108) is a bag-like part for catching an occupant in an emergency such as when the vehicle receives an impact. The cushion 108 receives gas from an inflator 110 and inflates and deploys into a flat shape toward a side of the occupant (not shown) seated in the seat 102. The cushion 108 is formed into a bag by stacking two pieces of base fabric and sawing or adhering these pieces of fabric together, the base fabric constituting a surface of the cushion 108, or by means of spinning and weaving using an OPW (one-piece woven) technique.

In the present embodiment, the cushion 108 is built in the vicinity of a side portion of the seat 102. The cushion 108 is installed in the seat frame 106 via the inflator 110. In particular, in the present embodiment, the cushion 108 and the inflator 110 are installed in the center of the seat frame 106 in the vehicle width direction of the seat 102, that is, the occupant side of the seat frame 106 when the occupant is seated normally in the seat 102.

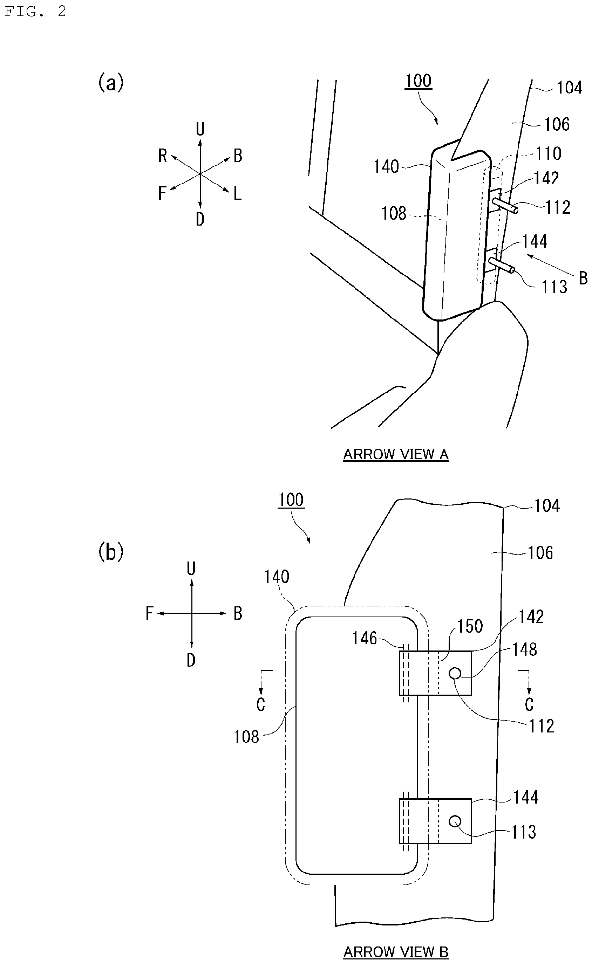

The inflator 110 is a gas generating device, which is activated in response to an activation signal transmitted from the vehicle upon occurrence of an impact, and supplies the gas to the inside of the cushion 108. The inflator 110 employed in the present embodiment is of a cylinder (tubular) type, and is installed in the cushion 108, at the rear side of the vehicle, with a longitudinal direction of the inflator 110 aligned with the vertical direction. The inflator 110 is provided with stud bolts 112, 113 (see Fig. 2(a)). The stud bolts 112, 113 pass through the cushion 108 and are fastened to the seat frame 106.

Currently prevalent inflators include inflators that are filled with a gas generating agent and burn the gas generating agent to generate gas, inflators that are filled with compression gas and supply the gas without generating heat, and hybrid inflators that use both combustion gas and compression gas. Any of these inflators can be used as the inflator 110.

Fig. 1(b) is a diagram illustrating how the cushion 108 of Fig. 1(a) is stored. As shown in Fig. 1(b), the cushion 108 is reduced in size by being rolled or folded and then stored inside the seat back 104. In the present embodiment, the cushion 108 is stored in such a manner as to sandwich the seat frame 106, so that the cushion 108 can be stored efficiently in limited space inside the seat back 104.

The surface of the cushion 108 in such stored state is covered by a cover 140. The cover 140 is formed of the same material as the base fabric of the cushion 108, a nonwoven fabric, or the like, and retains the state in which the cushion 108 is reduced in size by being rolled or folded. Although the cover 140 covers the entire cushion 108, the cover 140 can retain the cushion 108 by simply covering at least a part of the cushion 108.

Fig. 2 is a diagram illustrating, from a different direction, the cushion 108 in the stored state shown in Fig. 1(b). Fig. 2(a) is an arrow A view illustrating the cushion 108 in the stored state shown in Fig. 1(b), slightly from the front left side of the vehicle width direction. As shown in Fig. 2(a), the cushion 108 of the present embodiment is provided with two belt-like tabs 142, 144 as retaining portions for retaining the position of the cushion 108 in the stored state thereof. The tabs 142, 144 are respectively hooked on the stud bolts 112, 113 extending from the inflator 110 and passing through the seat frame 106.

Fig. 2(b) is an arrow B view illustrating the cushion 108 of Fig. 2(a), facing the cushion 108 from the left side of the vehicle width direction. Since the tabs 142, 144 share the same configuration, the upper tab 142 is described. The tab 142 is formed of the same material as the base fabric of the cushion 108, passes through the cover 140, and extends toward the stud bolt 112. The tab 142 is attached to the cushion 108 by means of a stitched portion 146 and extends continuously from the cushion 108. The tab 142 can also be provided as an integral part of the base fabric of the cushion 108, i.e., as an extension of the base fabric of the cushion 108.

A tip of the tab 142 is provided with a penetrating hole portion 148 through which the stud bolt 112 is passed. Note that the tab 142 can also fasten the cushion 108 to the seat frame 108 by being hooked on a protrusion on the seat frame 106 or a structure other than the stud bolt 112 that is provided in the seat frame 106.

The tab 142 is provided with a slit 150 as a fragile portion between the hole portion 148 and the stitched portion 146. The slit 150 is a cut in the form of a dashed line as shown in Fig. 2(b). The slit 150 ruptures when the cushion 108 inflates and deploys, to disconnect the cushion 108 from the stud bolt 112. The fragile portion may be configured to be able to rupture at the time of inflation and deployment of the cushion 108, and can be appropriately realized as, other than the slit 150, a notch in the form of an indentation, a slot in the form of a long hole, or the like.

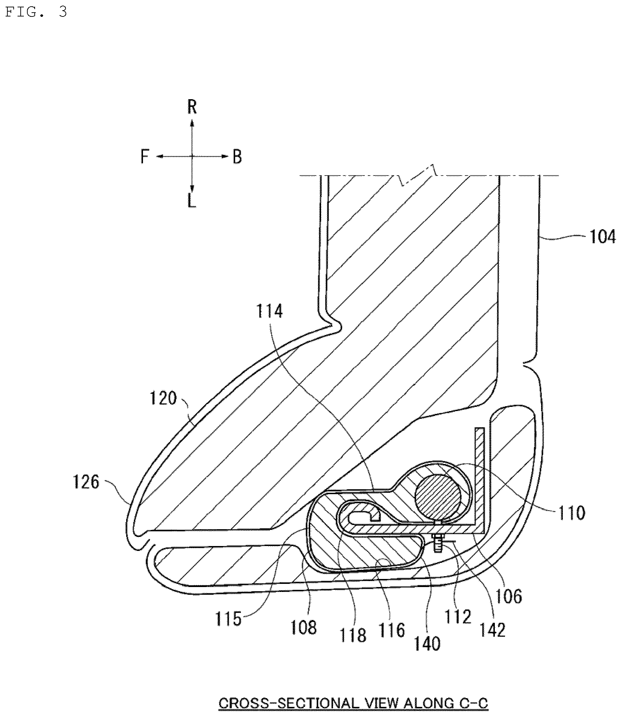

Fig. 3 is a cross-sectional view of the cushion 108 in the stored state shown in Fig. 2(b), the cross-sectional view being taken along C-C. As shown in Fig. 3, by using the cover 140 and the tab 142, the cushion 108 is stored in an inner inflating portion 114 located on the occupant side of the seat frame 106 and an outer inflating portion 116 on the opposite side of the seat frame, in the seat back 104, with the seat frame 106 therebetween.

The inner inflating portion 114, connected to the inflator 110, is the first part of the cushion 108 that receives the gas from the inflator 110 to inflate. The outer inflating portion 116 is continuous with the inner inflating portion 114, and receives the gas from the inner inflating portion 114 to inflate and deploy. The part between the inner inflating portion 114 and the outer inflating portion 116 is folded back along a front edge 118 of the seat frame 106 (folded portion 115). In other words, the outer inflating portion 116 is folded back with respect to the inner inflating portion 114, toward the opposite side of the seat frame 106 from the occupant side, via the front edge 118 of the seat frame 106. In this folded state, the outer inflating portion 116 is retained by the tab 142, on the opposite of the seat frame 106 from the occupant side.

In the present embodiment, because the cushion 108 is stored on both the occupant side of the seat frame 106 and the opposite side of the seat frame 106, the limited space inside the seat back 104 packed with a seat pad 120 and the like can be utilized efficiently. The side airbag apparatus 100 can be applied to various vehicle seats, ranging from a seat having a wide space around the seat frame 106 to a seat having a narrow space around the seat frame 106. Thus, the side airbag apparatus 100 is highly versatile. Since the space for installing the side airbag apparatus 100 does not need to be wide, the present invention can contribute to the downsizing of the vehicle seat.

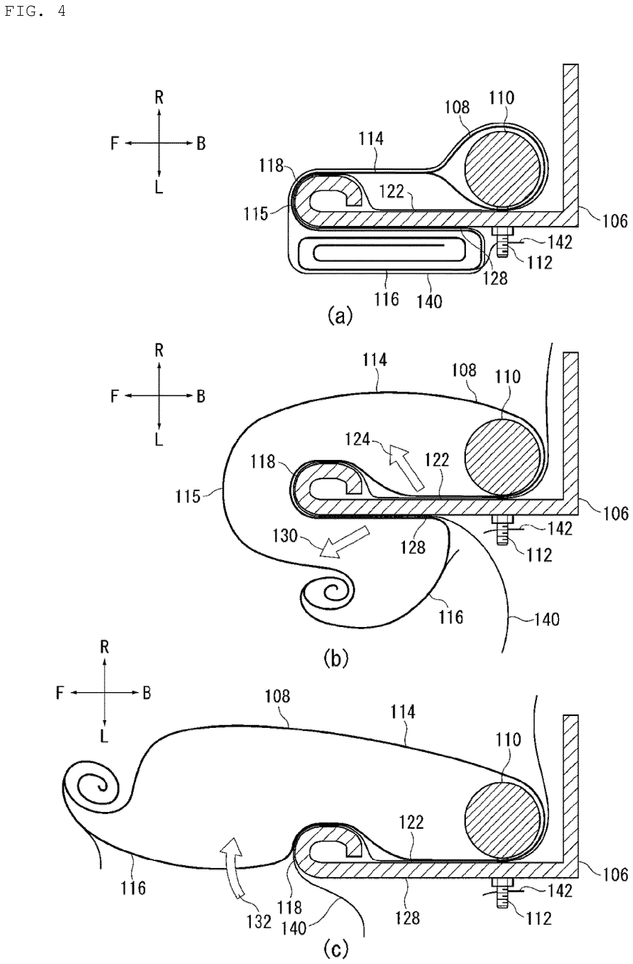

According to the side airbag apparatus 100, since the cushion 108 is stored in the inner inflating portion 114 and the outer inflating portion 116 by using the cover 140 and the tab 142, not only is it possible to store the cushion 108 efficiently in the narrow seat back 104, but also expedite inflation and deployment of the cushion 108 and improvement of the occupant restraining force can be accomplished. A further configuration of the side airbag apparatus 100 is described hereinafter with reference to Fig. 4.

Fig. 4 is a diagram illustrating a process of inflating and deploying the cushion 108 of Fig. 3. Fig. 4(a) illustrates an outline of the cushion 108 in the stored state shown in Fig. 3. As shown in Fig. 4(a), the outer inflating portion 116 folded back from the inner inflating portion 114 is fastened to the stud bolt 112 by the tab 142, outside the seat frame 106, i.e., on the side opposite to the inner inflating portion 114.

Fig. 4(b) illustrates a state obtained immediately after the inflator 110 shown in Fig. 4(a) is activated. As shown in Fig. 4(b), once the gas is fed from the inflator 110, the inner inflating portion 114 and the outer inflating portion 116 start to inflate and deploy. The force resulting from this inflation and deployment causes the tab 142 to rupture at the slit 150 (see Fig. 2(b)), releasing the cushion 108.

The cover 140, too, can appropriately be provided with a fragile portion (not shown) that ruptures when the cushion 108 inflates and deploys. By providing the cover 140 with a slit, a notch or the like as the fragile portion, the cover 140, too, can release the cushion 108. In a case where the cover 140 is formed of a nonwoven fabric, rims of the nonwoven fabric can be heat-welded beforehand, and these heat-welded rims can be configured to be peeled from each other by inflation pressure of the cushion 108. In this manner, the cushion 108 can be released in response to inflation and deployment. Note that the tab 142 does not have to be provided with the slit 150 (see Fig. 4(a)) if the cover 140 retains the cushion 108 in a releasable manner by means of a slit, heat-welding, or the like.

The cushion 108 starts to inflate from the inner inflating portion 114 stored on the occupant side of the seat frame 106. At this moment, the inner inflating portion 114 can obtain a reaction force 124 by pressing an inner side surface 122 of the seat frame 106. Since the inner inflating portion 114 is located upstream of the gas flow in the cushion 108, the cushion 108 can obtain the reaction force 124 by means of the inner inflating portion 114 at an early stage, the reaction force 124 acting from the seat frame 106 onto the occupant side. With the reaction force 124 that the inner inflating portion 114 obtains from the seat frame 106, the cushion 108 can efficiently push, for example, the seat pad 120 (see Fig. 3) and the outermost layer 126 away, and thereby can be inflated and deployed promptly.

As shown in Fig. 4(a), in the present embodiment, the outer inflating portion 116 is stored in the seat back 104 while in contact with an outer side surface 128 of the seat frame 106 by the tab 142. According to this configuration, when inflating, the outer inflating portion 116 pushes the side surface 128 of the seat frame 106 to efficiently obtain a reaction force 130, as shown in Fig. 4(b). With the reaction force 130 that the outer inflating portion 116 obtains from the seat frame 106, the cushion 108 can inflate and deploy more promptly.

Fig. 4(c) illustrates a state in which the cushion 108 of Fig. 3(a) further inflates and deploys. As described above, the cushion 108 promptly inflates and deploys from the inside of the seat back 104 (see Fig. 3) toward the occupant side by using the reaction force 124 that the inner inflating portion 114 obtains from the seat frame 106 (see Fig. 4(b)), the reaction force 130 that the outer inflating portion 116 obtains from the seat frame 106, and a force 132 eliminating the folding between the inner inflating portion 114 and the outer inflating portion 116.

As described above, by being exposed promptly from the seat back 104, the cushion 108 can serve a so-called pre-push function in which the cushion 108 pushes the occupant away from the colliding part of the vehicle upon detection of the collision or at an early stage of advance detection of the collision. In the pre-push function, the cushion 108 first pushes back the occupant to some extent before the entire cushion 108 inflates, and thereby alleviates the impact of the entire cushion 108 restraining the occupant, to curb an occupant injury value.

As described above, in the present embodiment, since the cover 140 and the tab 142 are used to store the cushion 108 in both the inner inflating portion 114 on the occupant side of the seat frame 106 and the outer inflating portion 116 on the opposite side of the seat frame, the cushion 108 can be stored by efficiently using the limited space inside the seat back 104. Also, the inner inflating portion 114 is provided on the occupant side of the seat frame 106 as the root of the cushion 108. Thus, the cushion 108, too, is positioned on the occupant side of the seat frame 106, i.e., closer to the occupant, after inflating. Such a configuration can improve the occupant restraining force of the cushion 108.

### (Second Embodiment)

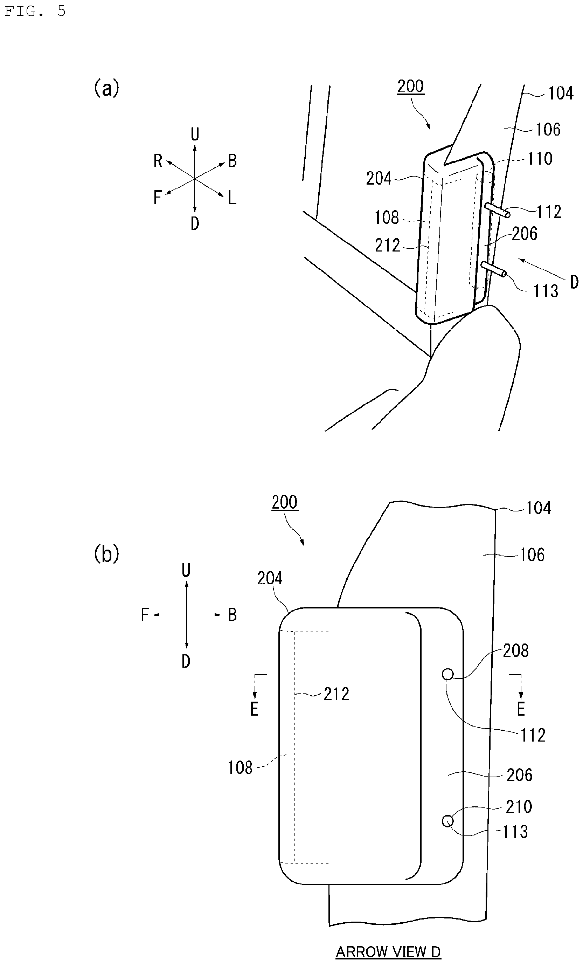

Fig. 5 is a diagram illustrating a side airbag apparatus 200 according to a second embodiment of the present invention. Fig. 5(a), corresponding to Fig. 2(a), illustrates the cushion 108 in the stored state thereof, slightly from the front left side of the vehicle width direction. In the following description, the components described above are given the same reference numerals; thus, the overlapping descriptions are omitted accordingly. Components with the same names as the aforementioned components have the same configurations and functions even if given different reference numerals.

As shown in Fig. 5(a), in the present embodiment, a cover 204 is used as a retaining portion for retaining the position of a cushion 202 in a stored state thereof. As with the cover 140 shown in Fig. 2(a), the cover 204 is formed of the same material as the base fabric of the cushion 108, a nonwoven fabric, or the like, and retains the state of the cushion 108 in which the cushion 108 is reduced in size by being rolled or folded. Although the cover 204 covers the entire cushion 108, the cover 204 can retain the cushion 108 by simply covering at least a part of the cushion 108.

Fig. 5(b) is an arrow view D illustrating the cushion 108 of Fig. 5(a), facing the cushion 108 from the left side of the vehicle width direction. As shown in Fig. 5(b), the cover 204 is provided with an extended region 206 as an edge portion that does not include the cushion 108. The extended region 206 functions as a retaining portion similar to the tabs 142, 144 (see Fig. 1(b)). The extended region 206 is provided with penetrating hole portions 208, 210 through which the stud bolts 112, 113 are passed. Using the hole portions 208, 210, the cover 204 fastens the cushion 108 in its stored state to the stud bolts 112, 113. In the present embodiment, the retaining portion (extended region 206) is formed in a part of the cover 204, as described above.

A slit 212 in the form of a dashed line, for example, can be provided in the cover 204 as a fragile portion that ruptures when the cushion 108 inflates and deploys. The slit 212 can be provided appropriately in such a manner that the cover 204 opens when releasing the cushion 108. The fragile portion can also be realized by a notch in the form of an indentation or a slot in the form of a long hole, other than the slit 212. In a case where the cover 204 is formed of a nonwoven fabric, rims of the nonwoven fabric can be heat-welded beforehand, and these heat-welded rims can be configured to be peeled from each other by inflation pressure of the cushion 108. In this manner, the same function as that of the slit 212 can be realized.

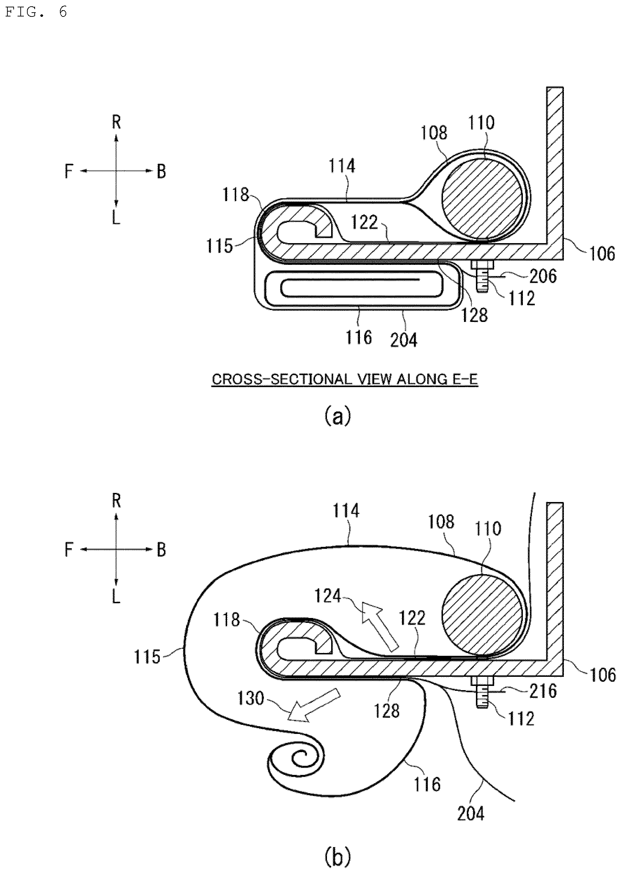

Fig. 6 is a diagram illustrating a process of inflating and deploying the cushion 108 of Fig. 5(b). Fig. 6(a) is a cross-sectional view of the cushion 108 in its stored state shown in Fig. 5(b), the cross-sectional view being taken along E-E. As with the first embodiment, by using the cover 204 functioning as the retaining portion, the cushion 108 is stored in the inner inflating portion 114 on the occupant side of the seat frame 106 and the outer inflating portion 116 on the opposite side of the seat frame, in the seat back 104 (see Fig. 3), with the seat frame 106 therebetween, as shown in Fig. 6(a). The outer inflating portion 116 folded back from the inner inflating portion 114 is fastened to the stud bolts by the cover 204, outside the seat frame 106, i.e., on the side opposite to the inner inflating portion.

Fig. 6(b) illustrates a state obtained immediately after the inflator 110 shown in Fig. 6(a) is activated. As shown in Fig. 6(b), once the gas is fed from the inflator 110, the inner inflating portion 114 and the outer inflating portion 116 start to inflate and deploy. The force resulting from this inflation and deployment causes the cover 204 to rupture at the slit 212 (see Fig. 5(b)), releasing the cushion 108. The released cushion 108 obtains the reaction forces 124, 130 and the like from the seat frame 106 and promptly inflates and deploys, as described in the first embodiment with reference to Fig. 4.

In the present embodiment as well, since the cover 204 is used to store the cushion 108 in both the inner inflating portion 114 on the occupant side of the seat frame 106 and the outer inflating portion 116 on the opposite side of the seat frame, the limited space inside the seat back 104 (see Fig. 3) can be utilized efficiently. As with the first embodiment, the cushion 108 can be inflated and deployed more promptly, thereby improving the occupant restraining force of the cushion 108.

The preferred embodiments of the present invention have been described above with reference to the accompanying drawings. However, the embodiments described above are preferred examples of the present invention, and therefore other embodiments can also be implemented by various methods. The present invention is not limited to the shapes, sizes, arrangements and the like of the detailed portions illustrated in the accompanying drawings, unless stated otherwise in the specification of the present application. The expressions and terminology used herein are for explanatory purposes, and should not be regarded as limiting unless otherwise stated.

Therefore, it is apparent that those skilled in the art can conceive of various modifications and alterations within the scope described in the patent claims, and it is also naturally understood that such modifications and alterations belong to the technical scope of the present invention.

### [Industrial Applicability]

The present invention can be used in a side airbag apparatus provided in a vehicle seat.

## Claims

1. A side airbag apparatus (100,200), comprising:
a seat frame (106) built in a seat back (104) of a vehicle seat along a side surface of the seat back (104);
an inflator (110) attached on an occupant side of the seat frame (106) when an occupant is seated normally in the vehicle seat (102);
an airbag cushion (108) connected to the inflator (110) and folded back to an opposite side of the seat frame (106) from the occupant side via a front edge of the seat frame (106); and
a retaining portion retaining the airbag cushion (108) in a folded-back state onto the opposite side of the seat frame (106) from the occupant side; wherein
the retaining portion has a fragile portion capable of releasing the airbag cushion (108) by rupturing when the airbag cushion (108) inflates and deploys,
**characterized in that**
the retaining portion is formed as a part of a cover (140,204) covering at least a part of the airbag cushion (108).

2. The side airbag apparatus (100,200) according to claim 1, further comprising a stud bolt (112,113) extending from the inflator (110) and passing through the seat frame (106), wherein the retaining portion retains the airbag cushion (108) in a folded-back state onto the opposite side of the seat frame (106) from the occupant side by being hooked on the stud bolt (112,113).

3. The side airbag apparatus (100,200) according to claim 1 or 2, wherein the retaining portion is formed of a nonwoven fabric.

4. The side airbag apparatus (100,200) according to any of claims 1 to 3, wherein the retaining portion is made of the same material as a base fabric continuous with a base fabric of the airbag cushion (108).

5. The side airbag apparatus (100,200) according to one of the claims 1 to 4, wherein the cover (140,204) is formed of a nonwoven fabric.

## Patentansprüche

1. Seitenairbageinrichtung (100, 200), umfassend:
einen Sitzrahmen (106), der in einer Rückenlehne (104) eines Fahrzeugsitzes entlang einer Seitenoberfläche der Rückenlehne (104) eingebaut ist;
einen Gasgenerator (110), der an einer Insassenseite des Sitzrahmens (106) angebracht ist, wenn ein Insasse normal auf dem Fahrzeugsitz (102) sitzt;
ein Airbagkissen (108), das mit dem Gasgenerator (110) verbunden ist und über eine Vorderkante des Sitzrahmens (106) auf eine gegenüberliegende Seite des Sitzrahmens (106) von der Insassenseite zurückgefaltet ist; und
einen Halteabschnitt, der das Airbagkissen (108) in einem zurückgefalteten Zustand auf der gegenüberliegenden Seite des Sitzrahmens (106) von der Insassenseite hält;
wobei der Halteabschnitt einen zerbrechlichen Abschnitt aufweist, der imstande ist, das Airbagkissen (108) durch Platzen zu lösen, wenn sich das Airbagkissen (108) aufbläst und entfaltet, **dadurch gekennzeichnet, dass** der Halteabschnitt als ein Teil einer Abdeckung (140, 204) ausgebildet ist, die wenigstens einen Teil des Airbagkissens (108) abdeckt.

2. Seitenairbageinrichtung (100, 200) nach Anspruch 1, ferner umfassend einen Stehbolzen (112, 113), der sich von dem Gasgenerator (110) erstreckt und durch den Sitzrahmen (106) verläuft, wobei der Halteabschnitt das Airbagkissen (108) in einem zurückgefalteten Zustand auf der gegenüberliegenden Seite des Sitzrahmens (106) von der Insassenseite dadurch hält, dass er in den Stehbolzen (112, 113) eingehakt ist.

3. Seitenairbageinrichtung (100, 200) nach Anspruch 1 oder 2, wobei der Halteabschnitt aus einem Vliesstoff ausgebildet ist.

4. Seitenairbageinrichtung (100, 200) nach einem der Ansprüche 1 bis 3, wobei der Halteabschnitt aus dem gleichen Material wie ein Basisstoff hergestellt ist, das mit einem Basisstoff des Airbagkissens (108) fortlaufend ist.

5. Seitenairbageinrichtung (100, 200) nach einem der Ansprüche 1 bis 4, wobei die Abdeckung (140, 204) aus einem Vliesstoff ausgebildet ist.

## Revendications

1. Appareil de sac gonflable latéral (100, 200), comprenant :
un cadre de siège (106) construit dans un dossier de siège (104) d'un siège de véhicule le long d'une surface latérale du dossier de siège (104) ;
un gonfleur (110) fixé sur un côté occupant du cadre de siège (106) lorsqu'un occupant est assis normalement dans le siège de véhicule (102) ;
un coussin de sac gonflable (108) connecté au gonfleur (110) et replié vers un côté opposé du cadre de siège (106) du côté de l'occupant par l'intermédiaire d'un bord avant du cadre de siège (106) ; et
une partie de retenue retenant le coussin de sac gonflable (108) dans un état replié sur le côté opposé du cadre de siège (106) du côté de l'occupant ;
la partie de retenue ayant une partie fragile capable de libérer le coussin de sac gonflable (108) en se rompant lorsque le coussin de sac gonflable (108) se gonfle et se déploie, **caractérisé en ce que**
la partie de retenue est formée en tant que partie d'un couverde (140,204) couvrant au moins une partie du coussin de sac gonflable (108).

2. Appareil de sac gonflable latéral (100, 200) selon la revendication 1, comprenant en outre un goujon (112, 113) s'étendant depuis le gonfleur(110) et passant à travers le cadre de siège (106), la partie de retenue retenant le coussin de sac gonflable (108) dans un état replié sur le côté opposé du cadre de siège (106) du côté de l'occupant en étant accroché sur le goujon (112, 113).

3. Appareil de sac gonflable latéral (100, 200) selon la revendication 1 ou 2, la partie de retenue étant formée d'un tissu non tissé.

4. Appareil de sac gonflable latéral (100, 200) selon l'une quelconque des revendications 1 à 3, la partie de retenue étant faite du même matériau qu'un tissu de base en continu avec un tissu de base du coussin de sac gonflable (108).

5. Appareil de sac gonflable latéral (100, 200) selon l'une des revendications 1 à 4, le couvercle (140, 204) étant formé d'un tissu non tissé.
